Europäisches Patentamt

European Patent Office

Office européen des brevets

(19)

(11) Veröffentlichungsnummer: **0 257 360
B1**

(12) **EUROPÄISCHE PATENTSCHRIFT**

(45) Veröffentlichungstag der Patentschrift:
**19.12.90**

(21) Anmeldenummer: **87111187.8**

(22) Anmeldetag: **03.08.87**

(51) Int. Cl.⁵: **B60T 13/56**

(54) **Bremskraftverstärker-Hauptzylinderbaugruppe.**

(30) Priorität: **25.08.86 DE 8622758 U**

(43) Veröffentlichungstag der Anmeldung:
**02.03.88 Patentblatt 88/9**

(45) Bekanntmachung des Hinweises auf die Patenterteilung:
**19.12.90 Patentblatt 90/51**

(84) Benannte Vertragsstaaten:
**DE FR GB IT**

(56) Entgegenhaltungen:
**DE-A- 2 460 529
DE-A- 2 628 204
DE-A- 2 635 514
DE-A- 2 711 510**

(73) Patentinhaber: **LUCAS INDUSTRIES public limited
company, Great King Street, Birmingham, B19 2XF West
Midlands(GB)**

(72) Erfinder: **Kaub, Manfred, Im Zillgen 16,
D-5401 Rhens(DE)**

(74) Vertreter: **Goetz, Rupert, Dipl.-Ing. et al, Wuesthoff &
Wuesthoff Patent- und Rechtsanwälte
Schweigerstrasse 2, D-8000 München 90(DE)**

**Beschreibung**

Die Erfindung betrifft eine Bremskraftverstärker-Hauptzylinderbaugruppe mit
- einem Verstärkergehäuse, in dem eine bewegliche Wand zwei Gehäusekammern voneinander trennt,
- einem Steuerventil, das in einer Ruhestellung die beiden Gehäusekammern miteinander verbindet, in einer Betätigungsstellung jedoch die beiden Gehäusekammern voneinander trennt und eine von ihnen mit einer Quelle eines Druckes verbindet, der sich vom Druck in der anderen Kammer unterscheidet,
- einem Zylindergehäuse, das an das Verstärkergehäuse angebaut ist, in dieses hineinragt und mindestens einen Druckkolben enthält, der einen Druckraum zum Unterdrucksetzen eines Bremskreises begrenzt,
- einem Vorschaltkolben, der eine größere wirksame Fläche als der Druckkolben hat, eine Vorschaltkammer begrenzt und gemeinsam mit der beweglichen Wand bewegbar ist, und
- einem Entlastungsventil, durch das die Vorschaltkammer bei Ausfall des Bremskraftverstärkers von Druck entlastbar ist.

Bei einer derartigen bekannten Baugruppe (DE-A-2 460 529) ist das Zylindergehäuse mit einem Flansch, der an einem seiner beiden Enden ausgebildet ist, am Verstärkergehäuse befestigt und weist einen kurzen Endabschnitt auf, der im Verstärkergehäuse zentriert ist. Im Zylindergehäuse sind axial hintereinander ein Primärdruckraum und ein Sekundärdruckraum ausgebildet, die durch je einen Druckkolben begrenzt sind und an die je ein Bremskreis eines Kraftfahrzeugs anschließbar ist. Zwischen dem Primärdruckraum und dem am Verstärkergehäuse befestigten Ende des Zylindergehäuses ist eine Vorschaltkammer ausgebildet, deren Durchmesser größer ist als derjenige des Primärdruckraumes. Die Vorschaltkammer enthält einen Vorschaltkolben, der mit der beweglichen Wand im Verstärkergehäuse durch eine Schubstange verbunden ist. Die Vorschaltkammer ist mit einem Anschluß für ein Druckmittelreservoir durch ein Entlastungsventil verbunden, das normalerweise durch einen Unterdruck geschlossen gehalten wird, der bei betriebsbereitem Bremskraftverstärker im Verstärkergehäuse herrscht. Bei Betätigung der Bremse verschiebt die Druckstange den Vorschaltkolben, so daß dieser in der Vorschaltkammer Bremsflüssigkeit verdrängt, die ihrerseits den primärseitigen Druckkolben vorschiebt. Die Strecke, um die sich dieser Druckkolben vorwärts bewegt, ist im Verhältnis der wirksamen Flächen des Vorschaltkolbens und dieses Druckkolbens größer als der Weg des Vorschaltkolbens. Bei intaktem Bremskraftverstärker und somit geschlossenem Entlastungsventil besteht also eine Wegübersetzung zwischen Vorschaltkolben und primärseitigem Druckkolben. Der sekundärseitige Druckkolben hat eine gleich große wirksame Fläche wie der primärseitige Druckkolben und bewegt sich deshalb um eine ebenso große Strecke wie dieser. Bei Ausfall des Bremskraftverstärkers öffnet sich das Entlastungsventil, so daß die bei Betätigung der Bremse vom Vorschaltkolben verdrängte Bremsflüssigkeit in das Druckmittelreservoir abströmt, ohne daß sich der Druck in der Vorschaltkammer erhöht. Der Vorschaltkolben verschiebt über eine an ihm ausgebildete axiale Verlängerung den primärseitigen Druckkolben unmittelbar, so daß dieser sich nur um die gleiche Strecke bewegt wie der Vorschaltkolben. Bei ausgefallenem Bremskraftverstärker wird die Betätigungskraft, die für die gemeinsame Verschiebung von Vorschaltkolben und primärseitigem Druckkolben aufgebracht werden muß, also nicht mehr von der wirksamen Fläche des Vorschaltkolbens bestimmt sondern von der kleineren Fläche des primärseitigen Druckkolbens.

Eine andere bekannte Hauptzylinderbaugruppe (US-A 4 086 770) weist ein Zylindergehäuse auf, das ebenfalls zum Anbauen an einen Bremskraftverstärker geeignet ist und zwei Druckkolben in Tandemanordnung sowie einen dem primärseitigen Druckkolben vorgeschalteten Vorschaltkolben aufweist. Der Vorschaltkolben hat auch hier eine größere wirksame Fläche als der primärseitige Druckkolben, besteht aber mit diesem aus einem Stück, so daß beide sich nur gemeinsam bewegen können. Bei Betätigung der Bremse verdrängt der Vorschaltkolben ein größeres Volumen als der Druckkolben freigibt. Infolgedessen strömt Bremsflüssigkeit aus der Vorschaltkammer an einer Lippendichtung des primärseitigen Druckkolbens vorbei in den zugehörigen Druckraum, so daß der an diesen angeschlossene Bremskreis schnell gefüllt wird. Wenn der Druck im primärseitigen Druckraum einen bestimmten Betrag überschreitet, öffnet ein Entlastungsventil, das eine Verbindung zwischen der Vorschaltkammer und einem Druckmittelreservoir freigibt, so daß die Vorschaltkammer von Druck entlastet wird und die zum weiteren Betätigen der Bremse erforderliche Kraft nur noch von der wirksamen Fläche des primärseitigen Druckkolbens bestimmt wird.

Beide beschriebenen bekannten Baugruppen haben, vom hinteren Ende des Verstärkergehäuses bis zum vorderen Ende des Zylindergehäuses gemessen, eine große Baulänge. Massenträgheitskräfte, die infolge von Erschütterungen auf das Zylindergehäuse samt darin untergebrachten Bauteilen und angebautem Druckmittelreservoir einwirken, können große Biegemomente im Bereich der Verbindung zwischen Zylindergehäuse und Verstärkergehäuse hervorrufen, so daß das gesamte Verstärkergehäuse, das üblicherweise die einzige Verbindung zwischen dem Zylindergehäuse und einem tragenden Teil des zugehörigen Fahrzeugs darstellt, kräftig gestaltet werden muß.

Aus der DE-A 2 635 514 ist eine Vorrichtung gemäß dem Oberbegriff des Anspruchs 1 bekannt. Dort ist der Vorschaltkolben von einer Hülse gebildet, die an ihrem hinteren Ende durch ein eingesetztes Basisteil abgeschlossen ist und mit ihrem vorderen Ende die Vorschaltkammer stirnseitig begrenzt. Als äußere Umgrenzung der Vorschaltkammer dient ein außerhalb des Verstärkergehäuses angeordneter Teil des Hauptzylindergehäuses.

Der Erfindung liegt die Aufgabe zugrunde, eine gattungsgemäße Bremskraftverstärker-Hauptzylinderbaugruppe bei gegebenen Anforderungen an ihre Leistungsfähigkeit raumsparender und leichter zu gestalten.

Die Aufgabe wird bei einer Bremskraftverstärker-Hauptzylinderbaugruppe der beschriebenen Gattung erfindungsgemäß durch die kennnzeichnenden Merkmale des Anspruch 1 gelöst.

Diese erfindungsgemäße Lösung ist unabhängig davon vorteilhaft, ob der Vorschaltkolben, insoweit übereinstimmend mit der DE-A 2 460 529 zum Herstellen einer Wegübersetzung dient oder gemäß der US-PS 4 086 770 als Schnellfüllkolben vorgesehen ist.

Das Merkmal, daß Vorschaltkolben und Vorschaltkammer innerhalb des Verstärkergehäuses angeordnet sind, ist schon gemäß den nicht vorveröffentlichten europäischen Patentanmeldungen 86103000.5 und 86103001.3 der Anmelderin vorgesehen; dort ist der Vorschaltkolben jedoch jeweils ein von der beweglichen Wand getrenntes Bauteil.

Die Erfindung ist vorzugsweise dadurch weitergebildet, daß der Vorschaltkolben einstückig mit einem Stützteil der beweglichen Wand ausgebildet ist, welches mit dem Verstärkergehäuse durch eine Membran verbunden ist. Auf diese Weise wird die Zahl der Einzelteile der erfindungsgemäßen Baugruppe vermindert und deren Herstellung entsprechend vereinfacht.

Die Erfindung ist vorzugsweise dadurch weitergebildet, daß
- der Zwischenkolben am Zylindergehäuse über eine Feder abgestützt ist, die bestrebt ist, ihn in Richtung zum Vorschaltkolben zu drücken,
- ein vom Zwischenkolben begrenzter Raum zwischen der ersten und der zweiten Dichtung an eine der Gehäusekammern angeschlossen ist, die bei intaktem Bremskraftverstärker unter geringerem Druck steht als die andere Gehäusekammer, wodurch die Feder überwunden wird, und
- der Zwischenkolben das Entlastungsventil derart steuert, daß es sich im Verlauf einer Bremsbetätigung bei ausgefallenem Bremskraftverstärker früher öffnet als bei intaktem Bremskraftverstärker.

Diese Ausführungsform kann dadurch weiter ausgestaltet sein, daß der Zwischenkolben mittels einer dritten Dichtung den Druckkolben umschließt und das Entlastungsventil von dieser dritten Dichtung in Verbindung mit einem am Druckkolben ausgebildeten Kanal gebildet ist.

Gemäß einem weiteren Merkmal der Erfindung ist die Vorschaltkammer mit dem Druckraum durch ein Rückschlagventil zum schnellen Füllen des zugehörigen Bremskreises verbunden.

Es ist ferner vorteilhaft, wenn die Vorschaltkammer mit einem Anschluß für ein Druckmittelreservoir durch ein zusätzliches, vom Zustand des Bremskraftverstärkers unabhängiges Entlastungsventil verbunden ist. Dieses Ventil begrenzt den Druck, der in der Vorschaltkammer höchstens entstehen kann, und verhindert somit, daß durch übermäßigen Druckaufbau in der Vorschaltkammer die Betätigung der Bremse unnötig erschwert wird.

Ferner kann der Vorschaltkolben einen Elastomerkörper als Kraftübersetzer zwischen einem Betätigungsglied und dem Druckkolben enthalten. Solche Elastomerkörper sind bei Bremskraftverstärkern üblich; neu ist jedoch ihre raumsparende Anordnung im Vorschaltkolben.

Die Anzahl der Bauteile der erfindungsgemäßen Baugruppe läßt sich weiter dadurch vermindern, daß der Vorschaltkolben mit einem Ventilsitz und einem Ventilgehäuse des Steuerventils einstückig ausgebildet ist.

Ein Ausführungsbeispiel der Erfindung wird im Folgenden anhand schematischer Zeichnungen mit weiteren Einzelheiten beschrieben. Es zeigt:

Fig. 1 einen Axialschnitt durch eine Bremskraftverstärker-Hauptzylinderbaugruppe in unbetätigtem Zustand und bei nicht betriebsbereitem Bremskraftverstärker;

Fig. 2 einen etwas vergrößerten Ausschnitt aus Fig. 1 ebenfalls in unbetätigtem Zustand, jedoch bei betriebsbereitem Bremskraftverstärker.

Die dargestellte Bremskraftverstärker-Hauptzylinderbaugruppe hat einen Bremskraftverstärker 10 mit einem zweiteiligen Verstärkergehäuse 12, das zum Anbauen an die Spritzwand eines Kraftfahrzeugs vorgesehen ist und einen Innenraum hat, der durch eine bewegliche Wand 14 in zwei Gehäusekammern 16 und 18 unterteilt ist.

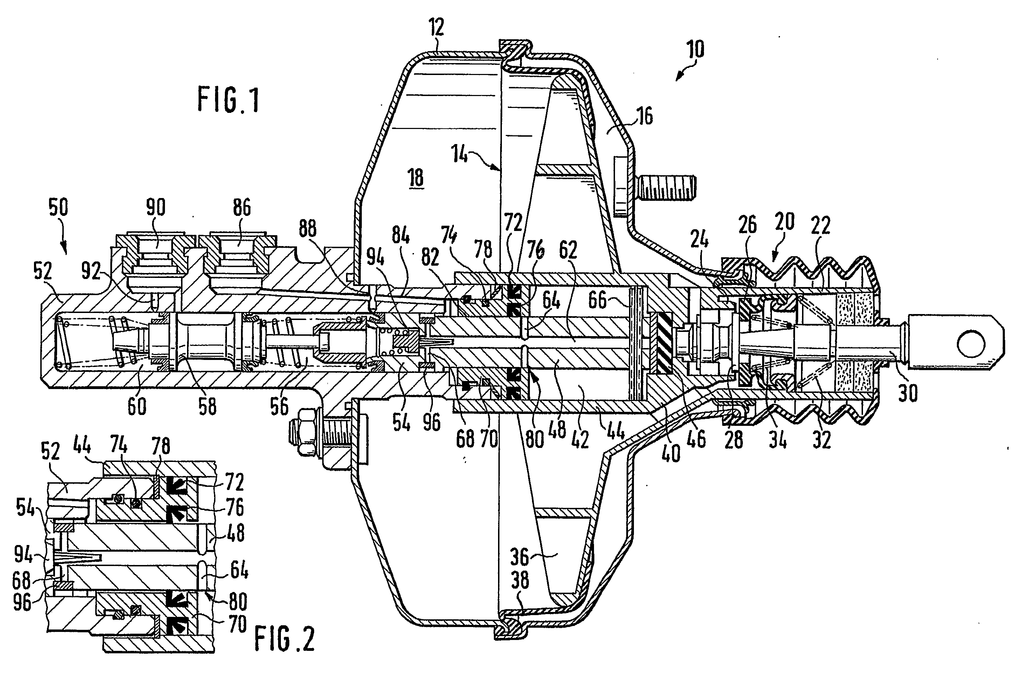

Zum Bremskraftverstärker 10 gehört ferner ein Steuerventil 20 mit einem rohrförmigen Ventilgehäuse 22, an dem ein äußerer ringförmiger Ventilsitz 24 einstückig ausgebildet ist. Diesem ist ein ebenfalls ringförmiger Ventilkörper 26 zugeordnet, der in Bezug auf das Ventilgehäuse 22 axial verstellbar, gegenüber dem Ventilgehäuse jedoch abgedichtet ist und ferner mit einem inneren Ventilsitz 28 zusammenwirkt, der an einem stangenförmigen Betätigungsglied 30 ausgebildet ist. Das Betätigungsglied 30 läßt sich gelenkig mit einem Bremspedal verbinden und ist durch eine am Ventilgehäuse 22 abgestützte Feder 32 in seine Ruhestellung, in Fig. 1 nach rechts, vorgespannt. Eine weitere, am Betätigungsglied 30 abgestützte Feder 34 drückt den Ventilkörper 26 in Richtung auf die beiden Ventilsitze 24 und 28 hin.

In der abgebildeten Ruhestellung ist der Ventilkörper 26 am inneren Ventilsitz 28 anliegend gehalten, während dieser eine Stellung einnimmt, in der er den Ventilkörper 26 daran hindert, auch am äußeren Ventilsitz 24 anzuliegen. Infolgedessen ist eine vom äußeren Ventilsitz 24 gesteuerte Verbindung zwischen den beiden Gehäusekammern 16 und 18 offen während eine vom inneren Ventilsitz 28 gesteuerte Verbindung zwischen der Atmosphäre und der Gehäusekammer 16 geschlossen ist. Die Gehäusekammer 18 ist an eine Unterdruckquelle, beispielsweise die Saugleitung eines Verbrennungsmotors, angeschlossen; der dort erzeugte Unterdruck herrscht bei der abgebildeten Ruhestellung des Steuerventils 20 in beiden Gehäusekammern 16 und 18.

Bestandteile der beweglichen Wand 14 sind ein Stützteil 36, das mit dem Ventilgehäuse 22 einstückig ausgebildet ist, sowie eine Membran 38, die das Stützteil 36 dicht mit dem Verstärkergehäuse 12 verbindet. Insoweit ist der Bremskraftverstärker 10 von üblicher Bauart.

Erfindungsgemäß weist die bewegliche Wand 14 als weiteren Bestandteil einen Vorschaltkolben 40 auf, der mit dem Stützteil 36 und dem Ventilgehäuse 22 einstückig ausgebildet ist und eine Vorschaltkammer 42 nach hinten, in Fig. 1 nach rechts, begrenzt. Radial nach außen ist die Vorschaltkammer 42 durch eine hülsenförmige Umgrenzung 44 begrenzt, die ebenfalls einstückig mit dem Stützteil 36 ausgebildet ist. In eine zentrale Aussparung des Vorschaltkolbens 40 ist ein Elastomerkörper 46 eingebettet, an dem von hinten her eine kleine vordere Stirnfläche des Betätigungsgliedes 30 und von vorne her eine größere hintere Stirnfläche einer Schubstange 48 derart anliegt, daß der Elastomerkörper 46 vollständig umschlossen ist und in an sich bekannter Weise als Kraftübersetzer wirkt.

Dem Bremskraftverstärker 10 ist ein Hauptzylinder 50 für eine Zweikreis-Bremsanlage zugeordnet. Der Hauptzylinder 50 hat ein Zylindergehäuse 52, das gleichachsig mit dem Verstärkergehäuse 12 angeordnet und an dessen Vorderseite befestigt ist. Ein erheblicher Teil, im dargestellten Beispiel etwa ein Drittel der Gesamtlänge des Hauptzylinders 50 ist innerhalb des Bremskraftverstärkers 10 untergebracht. In dem Zylindergehäuse 52 begrenzt ein primärer Druckkolben 54 einen primären Druckraum 56, an den ein erster Bremskreis anschließbar ist; ein sekundärer Druckkolben 58 begrenzt einen sekundären Druckraum 60, an den ein zweiter Bremskreis anschließbar ist.

Beide Druckkolben 54 und 58 haben den gleichen Durchmesser, der erheblich kleiner ist als der Innendurchmesser der hülsenförmigen Umgrenzung 44 der Vorschaltkammer 42. Der primäre Druckkolben 54 besteht mit der Schubstange 58 aus einem Stück; durch beide erstreckt sich eine axiale Bohrung 62 hindurch. Diese wird von einem mittleren diametralen Kanal 64 sowie einem hinteren diametralen Kanal 66 und einem vorderen diametralen Kanal 68 durchsetzt und ist über den hinteren diametralen Kanal 66, der von einer geschlitzten Federhülse gebildet ist, ständig mit der Vorschaltkammer 42 verbunden.

Zwischen dem Vorschaltkolben 40 und dem primären Druckkolben 54 ist ein ringförmiger Zwischenkolben 70 angeordnet, der gegen die zylindrische Innenwand der hülsenförmigen Umgrenzung 44 mit einer ersten Dichtung 72 größeren Durchmessers, gegen einen erweiterten Innenwandabschnitt des Zylindergehäuses 52 mit einer zweiten Dichtung 74 mittleren Durchmessers und gegen eine zylindrische Außenfläche der Schubstange 48 mit einer dritten Dichtung 76 kleineren Durchmessers abdichtet. Zwischen einer hinteren Stirnfläche des Zylindergehäuses 52 und dem Zwischenkolben 70 ist eine Feder 78 - dargestellt ist eine Tellerfeder - angeordnet, die bestrebt ist, den Zwischenkolben 70 vom Zylindergehäuse 52 weg, in Richtung zum Vorschaltkolben 40 hin, zu drücken.

Der Raum, der die Feder 78 enthält, ist mit der Gehäusekammer 18 des Bremskraftverstärkers 10 ständig verbunden; in diesem Raum herrscht deshalb bei betriebsbereitem Bremskraftverstärker ebenfalls Unterdruck. Der wirksame Durchmesser der ersten Dichtung 72 ist um so viel größer als derjenige der zweiten Dichtung 74, daß bei betriebsbereitem Bremskraftverstärker 10 Bremsflüssigkeit, welche die Vorschaltkammer 42 füllt und unter Atmosphärendruck steht, den Zwischenkolben 70 gemäß Fig. 2 gegen die hintere Stirnfläche des Zylindergehäuses 52 drückt. Dabei steht die dritte Dichtung 76 in verhältnismäßig großem axialen Abstand vor dem mittleren diametralen Kanal 64, so daß dieser in die Vorschaltkammer 42 mündet. Falls jedoch, beispielsweise in Folge eine Undichtheit des Verstärkergehäuses 12 oder der Membran 38, oder bei Stillstand des Verbrennungsmotors, an den die Gehäusekammer 18 angeschlossen ist, in dieser Atmosphärendruck oder ein ungenugendes Vakuum herrscht, sorgt die Feder 78 dafür, daß die dritte Dichtung 76, wie in Fig. 1 dargestellt, über dem mittleren diametralen Kanal 64 oder unmittelbar davor steht.

Der mittlere diametrale Kanal 64 bildet zusammen mit der dritten Dichtung 76 ein Entlastungsventil 80, das nach Ausfall des Unterdruckes in der vorderen Gehäusekammer 18 bei Betätigung der Bremse eine sehr geringe Bewegung der Schubstange 48 nach vorne genügen läßt, um den mittleren diametralen Kanal 64 mit einem an der Innenseite des Zwischenkolbens 70 vor der dritten Dichtung 76 ausgebildeten achsparallelen Kanal 82 zu verbinden, der über eine Bohrung 84 im Zylindergehäuse 52 ständig mit einem primären Anschluß 86 für ein nicht dargestelltes Druckmittelreservoir verbunden ist. Die Bohrung 84 ist zusätzlich durch eine radiale Bohrung 88 im Zylindergehäuse 52 mit dem primären Druckraum 56 verbunden, solange der primäre Druckkolben 54 seine in Fig. 1 abgebildete Ruhestellung einnimmt.

Das Zylindergehäuse 52 weist ferner einen sekundären Anschluß 90 für das Druckmittelreservoir auf; dieser Anschluß ist durch eine radiale Bohrung 92 mit dem sekundären Druckraum 60 verbunden, solange der sekundäre Druckkolben 58 seine abgebildete Ruhestellung einnimmt.

Im primären Druckkolben 54 ist am vorderen Ende der axialen Bohrung 62 ein Rückschlagventil 94 angeordnet, das eine Druckmittelströmung so lange zuläßt, wie der Druck im primären Druckraum 56 kleiner ist als in der Vorschaltkammer 42.

Dem vorderen diametralen Kanal 68 ist ein ebenfalls als Rückschlagventil ausgebildetes zusätzliches Entlastungsventil 96 zugeordnet, das Bremsflüssigkeit von der Vorschaltkammer 42 über die Bohrung 84 in das Druckmittelreservoir abströmen läßt, wenn der Druck in der Vorschaltkammer 42 einen bestimmten Betrag überschreitet, unabhängig davon, ob der Bremskraftverstärker 10 intakt ist oder nicht.

Wenn die dargestellte Bremskraftverstärker-Hauptzylinderbaugruppe bei intaktem Bremskraftverstärker 10 betätigt wird, indem das Betätigungsglied 30 vom zugehörigen Bremspedal nach vorne verschoben wird, legt sich der Ventilkörper 26 gegen den äußeren Ventilsitz 24 und unterbricht dadurch die Verbindung zwischen den beiden Gehäusekammern 16 und 18, in denen bis dahin der gleiche Unterdruck geherrscht hat. Unmittelbar darauf wird durch weitere Vorwärtsbewegung des Betätigungsgliedes 30 der innere Ventilsitz 28 vom Ventilkörper 26 abgehoben, wodurch Luft von hinten her durch das Ventilgehäuse 22 in die hintere Gehäusekammer 16 einströmen kann, während der Unterdruck in der vorderen Gehäusekammer 18 erhalten bleibt. Durch diesen Druckunterschied wird die bewegliche Wand 14 nach vorne verschoben, so daß der Vorschaltkolben 40 die Schubstange 48 samt primärem Druckkolben 54 vorwärts schiebt. Dadurch wird die Bremsflüssigkeit in der Vorschaltkammer 42 unter Druck gesetzt. Diesem Druck kann der Zwischenkolben 70 nicht ausweichen, da er gemäß Fig. 2 bei intaktem Bremskraftverstärker 10 von vorneherein seine vordere Endstellung einnimmt.

Folglich strömt in kurzer Zeit eine große Menge Bremsflüssigkeit aus der Vorschaltkammer 42 durch das Rückschlagventil 94 in den primären Druckraum 56, so daß der daran angeschlossene Bremskreis rasch gefüllt und dabei auch der sekundäre Druckkolben 58 vorgeschoben wird, so daß der an den sekundären Druckraum 60 angeschlossene Bremskreis ebenfalls rasch gefüllt wird. Der ansteigende Druck in der Vorschaltkammer 42 läßt das als Rückschlagventil ausgebildete Entlastungsventil 96 öffnen; infolgedessen nimmt das Druckmittelreservoir überschüssiges Druckmittel aus der Vorschaltkammer 42 auf, wodurch verhindert wird, daß in dieser ein den Kraftaufwand unnötig erhöhender Überdruck entsteht. Unmittelbar darauf bewirkt das Druckgefälle zwischen dem primären Druckraum 56 und der Vorschaltkammer 42, daß das Rückschlagventil 94 schließt.

Wenn jedoch die Bremse betätigt wird, während der Bremskraftverstärker 10 ausgefallen ist und der Zwischenkolben 70 infolgedessen seine Stellung gemäß Fig. 1 einnimmt, genügt eine nun vom Betätigungsglied 30 ohne Unterstützung durch den Bremskraftverstärker 10 hervorgerufene, für den Fahrer noch nicht oder kaum bemerkbare Vorwärtsbewegung der Schubstange 48, um das Entlastungsventil 80 zu öffnen, so daß Bremsflüssigkeit aus der Vorschaltkammer 42 über den hinteren diametralen Kanal 66, die axiale Bohrung 62, den mittleren diametralen Kanal 64, den achsparallelen Kanal 82, die Bohrung 84 und den Anschluß 86 in das Druckmittelreservoir abströmt. Eine nennenswerte Druckerhöhung in der Vorschaltkammer 42 findet somit nicht statt; der Fahrer hat infolgedessen nur die Kraft aufzubringen, die sich aus der wirksamen Fläche des primären Druckkolbens 54 und dem allmählich ansteigenden Druck in den beiden Bremskreisen ergibt. Der zum Füllen der Bremskreise erforderliche Pedalweg ist allerdings größer als bei intaktem Bremskraftverstärker, da nach dessen Ausfall auch die Schnellfüllwirkung des Vorschaltkolbens 40 entfällt.

**Patentansprüche**

1. Bremskraftverstärker-Hauptzylinderbaugruppe mit
   - einem Verstärkergehäuse (12), in dem eine bewegliche Wand (14) zwei Gehäusekammern (16, 18) voneinander trennt,

   - einem Steuerventil (20), das in einer Ruhestellung die beiden Gehäusekammern (16, 18) miteinander verbindet, in einer Betätigungsstellung jedoch die beiden Gehäusekammern (16, 18) voneinander trennt und eine (16) von ihnen mit einer Quelle eines Druckes verbindet, der sich vom Druck in der anderen Kammer (18) unterscheidet,
   - einem Hauptzylindergehäuse (52), das an das Verstärkergehäuse (12) angebaut ist, in dieses hineinragt und mindestens einen Druckkolben (54) enthält, der einen Druckraum (56) zum Unterdrucksetzen eines Bremskreises begrenzt,
   - einem in das Verstärkergehäuse (12) eingebauten Vorschaltkolben (40), der eine größere wirksame Fläche als der Druckkolben (54) hat, mit der er eine Vorschaltkammer (42) stirnseitig begrenzt und der als Bestandteil der beweglichen Wand (14) gemeinsam mit dieser bewegbar ist, und
   - einem Entlastungsventil (80), durch das die Vorschaltkammer (42) bei Ausfall des Bremskraftverstärkers (10) von Druck entlastbar ist, dadurch gekennzeichnet, daß
   - der Vorschaltkolben (40) einstückig mit einer hülsenförmigen äußeren Umgrenzung (44) der Vorschaltkammer (42) ausgebildet ist,
   - die hülsenförmige Umgrenzung (44) mittels einer ersten Dichtung (72) einen Zwischenkolben (70) umschließt, der einen Teil des Entlastungsventils (80) bildet und zusätzlich mittels einer zweiten Dichtung (74) vom Hauptzylindergehäuse (52) umschlossen ist, und
   - die hülsenförmige Umgrenzung (44) samt Vorschaltkammer (42) vollständig innerhalb des Verstärkergehäuses (12) angeordnet ist.

2. Baugruppe nach Anspruch 1, dadurch gekennzeichnet, daß
   - der Zwischenkolben (70) am Zylindergehäuse (52) über eine Feder (78) abgestützt ist, die bestrebt ist, ihn in Richtung zum Vorschaltkolben (40) zu bewegen,
   - ein vom Zwischenkolben (70) begrenzter Raum zwischen der ersten und der zweiten Dichtung (72, 74) an eine der Gehäusekammern (18) angeschlossen ist, die bei intaktem Bremskraftverstärker (10) unter geringerem Druck steht als die andere Gehäusekammer (16), wodurch die Feder (78) überwunden wird, und
   - der Zwischenkolben (70) das Entlastungsventil (80) derart steuert, daß dieses sich im Verlauf einer Bremsbetätigung bei ausgefallenem Bremskraftverstärker (10) früher öffnet als bei intaktem Bremskraftverstärker.

3. Baugruppe nach Anspruch 2, dadurch gekennzeichnet, daß der Zwischenkolben (70) mittels einer dritten Dichtung (76) den Druckkolben (54) umschließt und das Entlastungsventil (80) von dieser dritten Dichtung (76) in Verbindung mit einem am Druckkolben (54) ausgebildeten Kanal (64) gebildet ist.

4. Baugruppe nach einem der Ansprüche 1 bis 3, dadurch gekennzeichnet, daß der Vorschaltkolben (40) einstückig mit einem Stützteil (36) der beweglichen Wand (14) ausgebildet ist, welches mit dem Verstärkergehäuse (12) durch eine Membran (38) verbunden ist.

5. Baugruppe nach einem der Ansprüche 1 bis 4, dadurch gekennzeichnet, daß die Vorschaltkammer (42) mit dem Druckraum (56) durch ein Rückschlagventil (94) zum schnellen Füllen des zugehörigen Bremskreises verbunden ist.

6. Baugruppe nach einem der Ansprüche 1 bis 5, dadurch gekennzeichnet, daß die Vorschaltkammer (42) mit einem Anschluß (86) für ein Druckmittelreservoir durch ein zusätzliches, vom Zustand des Bremskraftverstärkers (10) unabhängiges Entlastungsventil (96) verbunden ist.

7. Baugruppe nach einem der Ansprüche 1 bis 6, dadurch gekennzeichnet, daß der Vorschaltkolben (40) einen Elastomerkörper (46) als Kraftübersetzer zwischen einem Betätigungsglied (30) und dem Druckkolben (54) enthält.

8. Baugruppe nach einem der Ansprüche 1 bis 7, dadurch gekennzeichnet, daß der Vorschaltkolben (40) mit einem Ventilsitz (24) und einem Ventilgehäuse (22) des Steuerventils (20) einstückig ausgebildet ist.

## Claims

1. A brake pressure booster and master cylinder assembly, comprising
- a booster casing (12) in which a movable wall (14) separates two compartments (16, 18) from each other,
- a control valve (20) which connects the two compartments (16, 18) with each other when it is in an inoperative position and separates the two compartments (16, 18) from each other when in an operative position, connecting one (16) of them to a source of pressure which differs from the pressure in the other compartment (18),
- a master cylinder casing (52) attached to the booster casing (12), projecting into the same, and containing at least one pressure piston (54) which defines a pressure chamber (56) for pressurizing a brake circuit,
- an input piston (40) which is installed in the booster casing (12) and has a larger effective surface than the pressure piston (54) by which it defines an input chamber (42) at the front end and which, being a component part of the movable wall (14), is movable together with the same, and
- a relief valve (80) adapted to relieve the input chamber (42) of pressure in case of failure of the brake pressure booster (10), characterized in that
- the input piston (40) is formed in one piece with a sleeve-like outer envelope (44) of the input chamber (42),
- the sleeve-like envelope (44) encloses an intermediate piston (70) by a first seal (72), which piston forms part of the relief valve (80) and is enclosed in addition by the master cylinder casing (52) by means of a second seal (74), and
- the sleeve-like envelope (44), including the input chamber (42), is arranged totally inside the booster casing (12).

2. The assembly as claimed in claim 1, characterized in that
- the intermediate piston (70) is supported in the cylinder casing (52) by a spring (78) tending to move it in the direction of the input piston (40),
- a space defined by the intermediate piston (70) between the first and second seals (72, 74) is connected to one of the compartments (18) which is under lower pressure than the other compartment (16) when the brake pressure booster is intact, whereby the spring (78) is overcome, and
- the intermediate piston (70) controls the relief valve (80) such that it will open sooner, in the course of brake actuation, if the brake pressure booster (10) has failed than if it is intact.

3. The assembly as claimed in claim 2, characterized in that the intermediate piston (70) encloses the pressure piston (54) by means of a third seal (76) and the relief valve (80) is formed by this third seal (76) in combination with a passage (64) formed in the pressure piston (54).

4. The assembly as claimed in one of claims 1 to 3, characterized in that the input piston (40) is formed integral with a support member (36) of the movable wall (14) which member is connected to the booster casing (12) by a diaphragm (38).

5. The assembly as claimed in one of claims 1 to 4, characterized in that the input chamber (42) communicates with the pressure chamber (56) through a check valve (94) for quick filling of the associated brake circuit.

6. The assembly as claimed in one of claims 1 to 5, characterized in that the input chamber (42) is connected by an additional relief valve (96) which is independent of the state of the brake pressure booster (10) to a connection for a pressure fluid reservoir.

7. The assembly as claimed in one of claims 1 to 6, characterized in that the input piston (40) contains an elastomer body (46) as a power transmitter between an actuating member (30) and the pressure piston (54).

8. The assembly as claimed in one of claims 1 to 7, characterized in that the input piston (40) is formed integral with a valve seat (24) and a valve casing (22) of the control valve (20).

## Revendications

1. Assemblage d'un amplificateur de force de freinage et d'un maître-cylindre, comportant:
- un carter d'amplificateur (12), dans lequel une paroi mobile (14) sépare deux chambres de carter (16, 18) l'une de l'autre,
- une soupape de commande (20) qui relie, dans une position de repos, les deux chambres de carter (16, 18) l'une avec l'autre tandis que, dans une position d'actionnement, elle sépare cependant les deux chambres de carter (16, 18) l'une de l'autre et relie l'une d'elles (16) avec une source d'une pression qui est différente de la pression régnant dans l'autre chambre (18),
- un carter (52) de maître-cylindre, qui est monté sur le carter (12) d'amplificateur, en pénétrant dans celui-ci et en contenant au moins un piston de pression (54), qui délimite une chambre de pression (56) pour la mise en dépression d'un circuit de freinage,

– un piston de pré-distribution (40), monté dans le carter (12) d'amplificateur, qui a une plus grande surface utile que le piston de pression (54), qui délimite sur le côté frontal une chambre de prédistribution (42) et qui est déplaçable, comme composant de la paroi mobile (14), en même temps que celle-ci,

– une soupape de décharge (80), par laquelle la chambre de pré-distribution (42) peut être déchargée en pression en cas de panne de l'amplificateur (10) de force de freinage, caractérisé en ce que:

– le piston de pré-distribution (40) forme une seule et même pièce avec une enveloppe extérieure (44) en forme de fourreau de la chambre de pré-distribution (42),

– l'enveloppe (44) en forme de fourreau entoure au moyen d'un premier joint d'étanchéité (72) un piston intermédiaire (70), qui fait partie de la soupape de décharge (80) et qui est entouré additionnellement, au moyen d'un second joint d'étanchéité (74), par le carter (52) du maître-cylindre, et

– l'enveloppe (44) en forme de fourreau, y compris la chambre de pré-distribution (42), est disposée complètement à l'intérieur du carter (12) d'amplificateur.

2. Assemblage selon la revendication 1, caractérisé en ce que:

– le piston intermédiaire (70) s'appuie contre le carter (52) du maître-cylindre par l'intermédiaire d'un ressort (78) qui a tendance à le déplacer en direction du piston de pré-distribution (40);

– un volume limité par le piston intermédiaire (70) entre le premier et le second joint d'étanchéité (72, 74) est relié à une des chambres de carter (18), qui est soumise, quand l'amplificateur de force de freinage (10) est intact, à une plus petite pression que l'autre chambre de carter (16), de sorte que le ressort (78) est détendu, et

– le piston intermédiaire (70) commande la soupape de décharge (80) de telle sorte que celleci, au cours d'un actionnement des freins quand l'amplificateur de force de freinage (10) est en panne, s'ouvre plus tôt que lorsque l'amplificateur de force de freinage est intact.

3. Assemblage selon la revendication 2, caractérisé en ce que le piston intermédiaire (70) entoure le piston de pression (54) au moyen d'un troisième joint d'étanchéité (76) et la soupape de décharge (80) est mise en liaison, par ce troisième joint d'étanchéité (76), avec un canal (64) formé sur le piston de pression (54).

4. Assemblage selon une des revendications 1 à 3, caractérisé en ce que le piston de pré-distribution (40) forme une seule et même pièce avec une partie (36) de la paroi mobile (14), qui est reliée au carter d'amplificateur (12) par une membrane (38).

5. Assemblage selon une des revendications 1 à 4, caractérisé en ce que la chambre de pré-distribution (42) est reliée à la chambre de pression (56) par un clapet anti-retour (94) pour un remplissage rapide du circuit de freinage associé.

6. Assemblage selon une des revendications 1 à 5, caractérisé en ce que la chambre de pré-distribution (42) est reliée à un raccord (86) pour un réservoir de fluide sous pression par une soupape additionnelle de décharge (96), indépendante de l'état de l'amplificateur de force de freinage (10).

7. Assemblage selon une des revendications 1 à 6, caractérisé en ce que le piston de pré-distribution (40) comporte un corps en matière élastomère (46) servant de transmetteur de force entre un organe d'actionnement (40) et le piston de pression (54).

8. Assemblage selon une des revendications 1 à 7, caractérisé en ce que le piston de pré-distribution (40) forme une seule et même pièce avec un siège (24) et un corps (22) de la soupape de commande (20).

FIG.1

FIG.2

EP 0 257 360 B1